(19) Europäisches Patentamt
European Patent Office
Office européen des brevets

(11) Veröffentlichungsnummer : **0 385 939 B1**

# (12) EUROPÄISCHE PATENTSCHRIFT

(45) Veröffentlichungstag der Patentschrift : **01.06.94 Patentblatt 94/22**

(51) Int. Cl.$^5$ : **C09B 41/00**

(21) Anmeldenummer : **90810124.9**

(22) Anmeldetag : **21.02.90**

## (54) Verfahren zur Herstellung von metallisierbaren Azofarbstoffen.

(30) Priorität : **02.03.89 DE 3906664**

(43) Veröffentlichungstag der Anmeldung : **05.09.90 Patentblatt 90/36**

(45) Bekanntmachung des Hinweises auf die Patenterteilung : **01.06.94 Patentblatt 94/22**

(84) Benannte Vertragsstaaten : **BE CH DE ES FR GB IT LI**

(56) Entgegenhaltungen :
**FR-A- 812 374**
**US-A- 2 812 321**

(56) Entgegenhaltungen :
**CHEMICAL ABSTRACTS, Band 106, Nr. 22, Juni 1987, Seite 88, Zusammenfassung Nr. 178104g, Columbus, Ohio, US; & JP-A-61 254 550 (MITSUI TOATSU CHEMICALS INC.) 12-11-1986**

(73) Patentinhaber : **CIBA-GEIGY AG**
**Klybeckstrasse 141**
**CH-4002 Basel (CH)**

(72) Erfinder : **Langfeld, Horst, Dr.**
**Im Proli 30**
**D-7889 Grenzach-Wyhlen 1 (DE)**
Erfinder : **Puebla, Claudio, Dr.**
**Talstrasse 26**
**D-7889 Grenzach-Wyhlen 1 (DE)**
Erfinder : **Sereinig, Günter**
**Am Schlierbach 2**
**D-7860 Schopfheim (DE)**

EP 0 385 939 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Kupplung von 1-Diazo-2-hydroxynaphthalin-4-sulfonsäure bzw. von der entsprechenden eine Nitrogruppe enthaltende Komponente auf eine Kupplungskomponente der Benzol-, Naphthalin- oder heterocyclischen Reihe, die eine Hydroxygruppe in Nachbarstellung zu der Kupplungsstelle enthält, verläuft in einigen Fällen langsam und mit unbefriedigenden Ausbeuten.

In den letzten Jahren ist man zunehmend bestrebt, Herstellungsverfahren für Farbstoffe und deren Zwischenprodukte zu automatisieren und zu optimieren, und zwar sowohl was den Herstellungsprozess anbetrifft, als auch hinsichtlich der Aufarbeitung. Um hier zu befriedigenden Ergebnissen zu gelangen, ist man auf Verfahren angewiesen, die sich durch folgende Kriterien auszeichnen: möglichst quantitative Ausbeute, reproduzierbar gute Qualität, Umsetzungen mit möglichst wenig Aufarbeitungsschritten sowie schnelle Umsetzungen, die eine hohe Zahl von Umsetzungen pro Zeiteinheit ermöglichen.

Das erfindungsgemässe Verfahren zur Herstellung von Azofarbstoffen der Formel

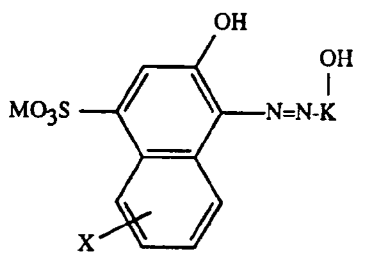

(1),

worin K der Rest einer Kupplungskomponente der Benzol- oder Naphthalinreihe oder der heterocyclischen Reihe ist, wobei die Hydroxygruppe in Nachbarstellung zu der Azogruppe an K gebunden ist, X Wasserstoff oder Nitro und M ein Alkaliion bedeutet, ist dadurch gekennzeichnet, dass man eine Diazokomponente der Formel

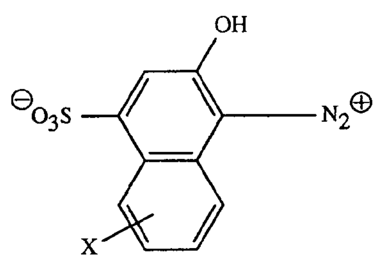

(2)

in Gegenwart eines oder mehrerer Puffergemische, ausgenommen das Puffergemisch Ammoniumchlorid/Ammoniak und gegebenenfalls in Gegenwart von Alkalichlorid, auf eine Kupplungskomponente der Formel

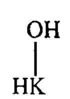

(3)

kuppelt, wobei K und X in den Formeln (2) und (3) die unter Formel (1) angegebenen Bedeutungen haben.

Die Kupplung von Verbindungen der Formel (2) auf Verbindungen der Formel (3) ist als schwierig bekannt. So wurde versucht mit Hilfe verschiedener Katalysatoren, wie z.B. in Gegenwart von Zinksalzen oder in Gegenwart von Calzium- oder Magnesiumsalzen, oder durch Kupplung unter Stickstoffatmosphäre die Ausbeute zu verbessern. Zinksalze verbessern die Ausbeute ebenso wie Calcium- und Magnesiumsalze; nachteilig ist der störende Salzgehalt nach beendeter Reaktion, wodurch eine Zwischenabscheidung des gebildeten Azofarbstoffes im allgemeinen notwendig ist. Das Arbeiten unter Stickstoffatmosphäre erfordert spezielle Apparaturen. Ein Verfahren zur Herstellung von Azofarbstoffen, worin die Kupplung in Gegenwart einer Stickstoffatmosphäre erfolgt, ist aus Chemical Abstracts, Band 106 (22), Nr. 178104g bekannt.

Es ist überraschend, dass das erfindungsgemässe Verfahren eine deutliche Steigerung der Ausbeute bei der Kupplung in Gegenwart eines oder mehrerer der oben angegebenen Puffergemische und gegebenenfalls in Gegenwart von Alkalichlorid ergibt und dass die Umsetzung bereits nach sehr kurzer Zeit nahezu vollständig beendet ist.

Die Verwendung von Alkalichlorid in dem erfindungsgemässen Verfahren hat sich bei der Kupplung mit Kupplungskomponenten mit hohen $pK_{OH}$-Werten, wie z.B. Naphthol, als vorteilhaft erwiesen.

Eine bevorzugte Ausführungsform des erfindungsgemässen Verfahrens ist dadurch gekennzeichnet, dass man in Gegenwart von Alkalichlorid kuppelt.

Als Alkalichlorid verwendet man in dem erfindungsgemässen Verfahren zweckmässigerweise Lithium-, Natrium- oder Kaliumchlorid. Gemäss einer bevorzugten Ausführungsform des erfindungsgemässen Verfahrens verwendet man Natriumchlorid als Alkalichlorid.

Die Menge, in der das Alkalichlorid in dem erfindungsgemässen Verfahren verwendet werden kann, kann in weiten Grenzen schwanken, im allgemeinen hat sich die 5- bis 15-fache molare Menge Alkalichlorid, insbesondere Natriumchlorid, bezogen auf die molare Menge der Diazokomponente der Formel (2), als vorteilhaft erwiesen.

Eine bevorzugte Ausführungsform des erfindungsgemässen Verfahrens ist dadurch gekennzeichnet, dass man die 6- bis 9-fache molare Menge Alkalichlorid verwendet.

Als Puffergemisch haben sich solche für den pH-Bereich 8,5 bis 11,5 als vorteilhaft erwiesen. Die Menge, in der das Puffergemisch in dem erfindungsgemässen Verfahren verwendet werden kann, kann in weiten Grenzen schwanken- im allgemeinen hat sich die 0,02- bis 10-fach molare Menge, insbesondere die 0,1- bis 10-fach molare Menge Puffergemisch, bezogen auf die molare Menge der Diazokomponente der Formel (2), als vorteilhaft erwiesen.

Als Puffergemisch verwendet man für das erfindungsgemässe Verfahren vorzugsweise eines oder mehrere der Puffergemische aus der Reihe Dinatriumcarbonat/Natriumhydroxid, Natriumhydrogencarbonat/Natriumhydroxid, Dinatriumhydrogenphosphat/Natriumhydroxid, Natriumdihydrogenphosphat/Natriumhydroxid, Borax/Natriumhydroxid, Borax/Salzsäure, Natriumborat/Natriumhydroxid, Natriumborat/Salzsäure, Borax/Borsäure, Dinatriumcarbonat/Borsäure, Borsäure/Natriumhydroxid, Veronalnatrium/Salzsäure, Glykokoll/Natriumhydroxid, Tris(hydroxymethyl)-aminomethan/Salzsäure, Stammlösung nach Britton-Robinson/Natriumhydroxid, Teorell-Stenhagensche-Stammlösung/Salzsäure und Kaliumdihydrogenphosphat/Borax.

Die Herstellung der Teorell-Stenhagenschen-Stammlösung und der Stammlösung nach Britton-Robinson können dem Chemiker-Kalender, C. Synowietz und K. Schäfer, Springer Verlag (1984), S. 536 entnommen werden. Die Konzentrationen der Komponenten der in dem erfindungsgemässen Verfahren verwendeten Puffergemische werden insbesondere so gewählt, dass sich ein pH-Wert von 8,5 bis 11,5 einstellt.

Werden für das erfindungsgemäss Verfahren mehrere Puffergemische eingesetzt, so verwendet man insbesondere z.B. folgende Kombinationen von Puffergemischen:

- Dinatriumcarbonat/Natriumhydroxid und Natriumhydrogencarbonat/Natriumhydroxid
- Dinatriumhydrogenphosphat/Natriumhydroxid und Natriumdihydrogenphosphat/Natriumhydroxid

Eine bevorzugte Ausführungsform des erfindungsgemässen Verfahrens ist dadurch gekennzeichnet, dass man eines oder beide der Puffergemische aus der Reihe Dinatriumcarbonat/Natriumhydroxid und Natriumhydrogencarbonat/Natriumhydroxid oder eines oder beide der Puffergemische aus der Reihe Dinatriumhydrogenphosphat/Natriumhydroxid und Natriumdihydrogenphosphat/Natriumhydroxid verwendet.

Eine besonders bevorzugte Ausführungsform des erfindungsgemässen Verfahrens ist dadurch gekennzeichnet, dass man bezogen auf die molare Menge der Diazokomponente der Formel (2) die 0,1- bis 1-fach, insbesondere die 0,2- bis 0,6-fach molare Menge Dinatriumcarbonat und/oder Natriumhydrogencarbonat oder die 0,1- bis 1-fach, insbesondere die 0,2- bis 0,6-fach molare Menge Dinatriumhydrogenphosphat und/oder Natriumdihydrogenphosphat verwendet.

Eine bevorzugte Ausführungsform des erfindungsgemässen Verfahrens ist dadurch gekennzeichnet, dass man unmittelbar vor der Kupplung der Lösung/Suspension, welche die Diazokomponente der Formel (2), Alkalichlorid und die saure Komponente eines oder mehrerer Puffergemische enthält, den pH auf einen Wert zwischen 8,5 und 11,5 einstellt; diese Einstellung erfolgt insbesondere mit der zugehörigen basischen Komponente der verwendeten Puffergemische.

In der oben angegebenen bevorzugten Ausführungsform des erfindungsgemässen Verfahrens werden immer beide Komponenten (saure und basische Komponente) eines Puffergemisches verwendet. Der Begriff sauer bzw. basisch für eine Komponente eines Puffergemisches ist hier und im folgenden relativ zur zweiten Komponente des Puffergemisches aufzufassen. Beispiele für saure Komponenten eines Puffergemisches sind die Komponenten Dinatriumcarbonat, Natriumhydrogencarbonat, Dinatriumhydrogenphosphat, Natriumdihydrogenphosphat, Borax, Natriumborat und Salzsäure der Puffergemische Dinatriumcarbonat/Natriumhydroxid, Natriumhydrogencarbonat/Natriumhydroxid, Dinatriumhydrogenphosphat/Natriumhydroxid, Natriumdihydrogenphosphat/Natriumhydroxid, Borax/Natriumhydroxid, Natriumborat/Natriumhydroxid, Veronalnatrium/Salzsäure.

Die zugehörigen basischen Komponenten der oben angegebenen Puffergemische sind Natriumhydroxid und Veronalnatrium.

Eine besonders bevorzugte Ausführungsform des erfindungsgemässen Verfahrens ist dadurch gekennzeichnet, dass man unmittelbar vor der Kupplung der Lösung/Suspension, welche die Diazokomponente der Formel (2), Natriumchlorid und Dinatriumcarbonat und/oder Natriumhydrogencarbonat enthält oder welche die Diazokomponente der Formel (2), Natriumchlorid und Dinatriumhydrogenphosphat und/oder Natriumdihydrogenphosphat enthält, den pH mit Natriumhydroxid auf einen Wert zwischen 8,5 und 11,5 einstellt.

Eine weitere bevorzugte Ausführungsform des erfindungsgemässen Verfahrens ist dadurch gekennzeichnet, dass man zu der Lösung/Suspension, welche die Diazokomponente der Formel (2), Alkalichlorid und die saure Komponente eines oder mehrerer Puffergemische enthält, eine Lösung/Suspension, welche die Kupplungskomponente der Formel (3) und die zugehörige basische Komponente des oder der verwendeten Puffergemische enthält, zugibt.

In der oben angegebenen bevorzugten Ausführungsform des erfindungsgemässen Verfahrens werden immer beide Komponenten (saure und basische Komponente) eines Puffergemisches verwendet.

Eine weitere besonders bevorzugte Ausführungsform des erfindungsgemässen Verfahrens ist dadurch gekennzeichnet, dass man zu der Lösung/Suspension, welche die Diazokomponente der Formel (2), Natriumchlorid und Dinatriumcarbonat und/oder Natriumhydrogencarbonat enthält oder welche die Diazokomponente der Formel (2), Natriumchlorid und Dinatriumhydrogenphosphat und/oder Natriumdihydrogenphosphat enthält, eine Lösung/ Suspension, welche die Kupplungskomponente der Formel (3) und Natriumhydroxid enthält, zugibt.

Eine ganz besonders bevorzugte Ausführungsform des erfindungsgemässen Verfahrens ist dadurch gekennzeichnet, dass man die Lösung/Suspension, welche die Diazokomponente der Formel (2), bezogen auf die molare Menge der Diazokomponente der Formel (2) die 5- bis 15-fach molar Menge, insbesondere die 6- bis 9-fach molare Menge, Natriumchlorid, bezogen auf die molare Menge der Diazokomponente der Formel (2) die 0,1- bis 1-fach molare Menge, insbesondere die 0,2- bis 0,6-fach molare Menge, einer oder beider Verbindungen der Reihe Dinatriumcarbonat und Natriumhydrogencarbonat oder einer oder beider Verbindungen aus der Reihe Dinatriumhydrogenphosphat und Nariumdihydrogenphosphat enthält, neutralisiert, unmittelbar vor der Kupplung den pH auf einen Wert zwischen 8,5 und 11,5, insbesondere zwischen 9 und 10 mit NaOH einstellt, und dann so schnell wie möglich bei einer Anfangstemperatur von mindestens 40°C die mittels NaOH auf einen pH-Wert zwischen 9 und 13 eingestellte Lösung der Kupplungskomponente der Formel (3) einfliessen lässt.

Eine interessante Ausführungsform des erfindungsgemässen Verfahrens ist dadurch gekennzeichnet, dass man zu der Lösung/Suspension, welche die Diazokomponente der Formel (2) und Natriumhydroxid enthält, eine Lösung/Suspension, welche die Kupplungskomponente der Formel (3) und Dinatriumcarbonat und/oder Natriumhydrogencarbonat enthält oder welche die Kupplungskomponente der Formel (3) und Dinatriumhydrogenphosphat und/oder Natriumdihydrogenphosphat enthält, zugibt. Diese Ausführungsform ist insbesondere für schnell kuppelnde Verbindungen, wie z.B. 5-Pyrazolon-Kupplungskomponenten, vorteilhaft.

Das erfindungsgemässe Verfahren wird im allgemeinen als kontinuierliches Verfahren ausgeführt. Bei nicht-kontinuierlicher Verfahrensweise hat sich die möglichst rasche Zugabe der Lösung der Kupplungskomponente zur Lösung der Diazokomponente (einstürzen) als vorteilhaft erwiesen.

Eine weitere bevorzugte Ausführungsform des erfindungsgemässen Verfahrens ist dadurch gekennzeichnet, dass man bei einer Temperatur von 40 bis 75°C kuppelt. Insbesondere erfolgt die Kupplung adiabatisch, wobei eine Anfangstemperatur von mindestens 40°C sich als besonders vorteilhaft erwiesen hat.

Nach erfolgter Kupplung kann der Azofarbstoff der Formel (1) ohne weitere Reinigung direkt weiterverarbeitet werden, z.B. durch Metallisierung zu einem Metallkomplexfarbstoff. Soll der Farbstoff der Formel (1) isoliert werden, hat es sich als günstig erwiesen die Kupplungsmasse kurz zu erwärmen, z.B. auf eine Temperatur von 60 bis 90°C, wodurch eine gut filtrierbare Form des Kupplungsproduktes erhalten wird.

Die Diazokomponenten der Formel (2), die nach dem erfindungsgemässen Verfahren eingesetzt werden können, sind insbesondere 1-Diazo-2-hydroxynaphthalin-4-sulfonsäure und 1-Diazo-6-nitro-2-hydroxynaphthalin-4-sulfonsäure. Die Diazokomponenten der Formel (2) sind bekannt und werden nach bekannten Verfahren hergestellt.

Die Kupplungskomponenten der Formel (3) sind bekannt und werden nach bekannten Verfahren hergestellt. Vorzugsweise werden in dem erfindungsgemässen Verfahren Kupplungskomponenten eingesetzt, die der Benzol- oder der Naphthalinreihe, oder der 5-Pyrazolon-, Hydroxychinolin- oder Acetoacetarylid- oder Benzoylessigsäure-Reihe angehören.

Die Kupplungskomponenten der Formel (3) können ausser durch die Hydroxygruppe noch durch folgende Substituenten substituiert sein: $C_1$-$C_6$-Alkyl, $C_1$-$C_6$-Alkoxy, $C_2$-$C_6$-Alkanoylamino, $C_1$-$C_6$-Alkoxycarbonylamino, Phenyl, Amino, Halogen, Sulfo, Sulfonamid und Sulfongruppen, wobei der Phenylrest durch die oben angegebenen Substituenten weitersubstituiert sein kann.

Als $C_2$-$C_6$-Alkanoylamino kommt z.B. Acetylamino, Propionylamino und Butyrylamino in Betracht.

Als $C_1$-$C_6$-Alkoxycarbonylamino kommt z.B. Methoxycarbonylamino und Aethoxycarbonylamino in Betracht.

Als $C_1$-$C_6$-Alkyl kommt z.B. Methyl, Aethyl, Propyl, Isopropyl, Butyl, sek.-Butyl, tert.-Butyl, Isobutyl, Pentyl und Hexyl in Betracht.

Als $C_1$-$C_6$-Alkoxy kommt z.B. Methoxy, Aethoxy, Propoxy, Isopropoxy und Butoxy in Betracht.

Als Halogen kommt z.B. Fluor, Brom und insbesondere Chlor in Betracht.

Als Sulfonamido kommt z.B. $-SO_2NH_2$, $SO_2NHC_1$-$C_6$-Alkyl, wie z.B. $-SO_2NHCH_3$ und $-SO_2NHC_2H_5$ und $-SO_2N(C_1$-$C_6$-Alkyl$)_2$ wie z.B. $-SO_2N(CH_3)_2$ und $-SO_2N(C_2H_5)_2$ sowie

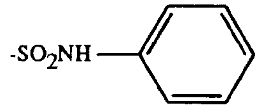

,

wobei der Phenylrest substituiert sein kann, z.B. durch Sulfo oder Carboxy, in Betracht.

Als Sulfongruppe kommt z.B. $-SO_2$-$C_1$-$C_6$-Alkyl wie $-SO_2$-$CH_3$ und $-SO_2$-Aryl wie Phenylsulfonyl in Betracht.

Gemäss einer besonders bevorzugten Ausführungsform des erfindungsgemässen Verfahrens verwendet man Kupplungskomponenten der Formel (3), worin K ein Benzol-, Naphthalin- oder 1-Phenyl-3-methylpyrazol-5-on-Rest ist, der ein bis drei der oben genannten Substituenten enthalten kann; insbesondere bedeutet K den Naphthylrest.

Besonders geeignete Kupplungskomponenten sind Phenole, die mit $C_1$-$C_6$-Alkyl und/oder $C_1$-$C_6$-Alkanoylamino, $C_1$-$C_6$-Alkoxycarbonylamino substituiert sind und vor allem Naphthole, die gegebenenfalls mit Chlor, $C_2$-$C_6$-Alkanoylamino-, $C_1$-$C_6$-Alkoxycarbonylamino-, Sulfo, Sulfonamid- oder Sulfongruppen substituiert sind, wie z.B. 4-Methylphenol, 4-t-Butylphenol, 2,4-Dimethylphenol, 2-Acetylamino-4-methylphenol, 1- oder 2-Naphthol, 1-Naphthol-3-, -4- oder -5-sulfosäure, 2-Naphthol-3-, -4-, -5-, -6-, -7- oder -8-sulfosäure, 2-Naphthol-6-sulfamid, 1-Acetylamino-7-naphthol, 1-Acetylamino-6-naphthol, 1-Propionylamino-7-naphthol und 1-Carbomethoxyamino-7-naphthol; insbesondere verwendet man als Kupplungskomponente der Formel (3) 1-Naphthol, 2-Naphthol, 5,8-Dichlor-1-naphthol, 1-Naphthol-5-sulfonsäure, 8-Acetylamino-2-naphthol, 6-Acetylamino-2-naphthol-4-sulfonsäure, 1-Phenyl-3-methylpyrazol-5-on, 6-Amino-1-naphthol-3-sulfonsäure oder 4-tert.-Butylphenol.

Eine ganz besonders wichtige Ausführungsform des erfindungsgemässen Verfahrens ist dadurch gekennzeichnet, dass man 1-Diazo-6-nitro-2-hydroxynaphthalin-4-sulfonsäure in wässriger Lösung mit der, bezogen auf die molare Menge der Diazokomponente, 5- bis 15-fach molaren Menge, insbesondere der 6- bis 9-fach molaren Menge, Natriumchlorid versetzt, die Lösung mit NaOH neutralisiert und unmittelbar vor der Kupplung die, bezogen auf die molare Menge der Diazokomponente, 0,1- bis 1-fach molare Menge, insbesondere die 0,2- bis 0,6-fach molare Menge, einer oder beider Verbindungen der Reihe Dinatriumcarbonat und Natriumhydrogencarbonat oder einer oder beider Verbindungen aus der Reihe Dinatriumhydrogenphosphat und Natriumdihydrogenphosphat zusetzt und dann so schnell wie möglich bei einer Anfangstemperatur von mindestens 40°C die mittels NaOH auf einen pH-Wert zwischen 9 und 13 eingestellte Lösung von β-Naphthol einfliessen lässt.

Die nach dem erfindungsgemässen Verfahren erhaltenen Azofarbstoffe eignen sich zur Herstellung von Metallkomplexfarbstoffen, wie z.B. Chrom- oder Kobaltkomplexazofarbstoffen, wobei die Metallisierung nach an sich bekannten Methoden erfolgt.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1: In 150 Teile Wasser werden 14,75 Teile 1-Diazo-6-nitro-2-hydroxynaphthalin-4-sulfonsäure eingetragen. Anschliessend gibt man 20 Teile Natriumchlorid hinzu und stellt den pH-Wert mit Hilfe einer wässrigen NaOH-Lösung (50%ig) auf den Neutralpunkt ein. Die Temperatur steigt dabei auf ca. 42° an. Dann versetzt man mit 2 Teilen Natriumdihydrogenphosphat, vorgelöst in der Mindestmenge Wasser, und anschliessend sofort mit einer Lösung, die wie folgt hergestellt wurde: In 50 Teile 60° warmes Wasser werden 7,5 Teile 2-Naphthol eingetragen und mit Hilfe von 1,9 Teilen NaOH gelöst, wobei sich ein pH-Wert von ca. 12 einstellt, und dann versetzt man mit 7,5 Teilen Natriumchlorid. Das Reaktionsgemisch wird sofort gut durchgerührt, wobei sich eine Temperatur von ca. 50° einstellt und der pH auf einen Wert zwischen 9,8 und 10,3 fällt. Nach 5 bis 10 Minuten ist die Kupplung beendet. Das Kupplungsprodukt wird mit Salzsäure (32%ig) auf den pH-Wert 7 gestellt und bei 80° filtriert. Die Ausbeute beträgt ca. 91 bis 92 % der Theorie.

Beispiel 2: Verfährt man wie in Beispiel 1 angegeben, verwendet jedoch statt 2 Teilen Natriumdihydrogenphosphat 2 Teile Dinatriumcarbonat und zum Lösen von 2-Naphthol statt 1,9 Teilen NaOH 1,7 Teile NaOH, so erhält man den gleichen Farbstoff in einer Ausbeute von ca. 90 % der Theorie.

Beispiele 3 bis 6: Verfährt man wie in Beispiel 1 angegeben, verwendet jedoch statt 2 Teilen Natriumdihydrogenphosphat eine äquimolare Menge Natriumhydrogencarbonat, Dinatriumhydrogenphosphat, Dinatriumcarbonat/Natriumhydrogencarbonat im molaren Verhältnis 1:1 oder Dinatriumhydrogenphosphat/Natriumdihydrogenphosphat im molaren Verhältnis 1:1 und statt 1,9 Teile NaOH die entsprechende, zur Einstellung eines pH-Wertes von 9,8 bis 10,3 des Reaktionsgemisches notwendige Menge NaOH, so erhält man den gleichen Farbstoff.

Beispiele 7 und 8: Wenn man in Beispiel 1 oder 2 anstelle von 1-Diazo-6-nitro-2-hydroxynaphthalin-4-sulfonsäure eine äquimolare Menge 1-Diazo-2-hydroxynaphthalin-4-sulfonsäure verwendet, erhält man einen Farbstoff mit ähnlich hoher Ausbeute in vergleichbar kurzer Verweilzeit im Kupplungskessel.

Beispiel 9: In 170 Teilen Wasser werden 37,5 Teile 1-Diazo-2-naphthol-4-sulfonsäure eingetragen und anschliessend der pH-Wert der Mischung mit Hilfe einer 50%igen NaOH-Lösung auf den Neutralpunkt eingestellt. Die Temperatur steigt hierbei auf 30 bis 35° an. Innerhalb von 5 Minuten wird dann eine separat vorbereitete Lösung von 18,4 Teilen 1-Phenyl-3-methyl-5-pyrazolon in 110 Teilen Wasser unter Zusatz von 8 Teilen 50%iger NaOH-Lösung und 4 Teilen Natriumdihydrogenphosphat zugegeben. Das Reaktionsgemisch wird gerührt, wobei sich eine Temperatur von ca. 35° und ein pH-Wert von ca 10 einstellt. Bei Abfall des pH auf einen Wert unter 9,7 wird mit 50%iger NaOH-Lösung ein Wert von 10 eingestellt. Das Kupplungsprodukt wird mit Salzsäure (32 %) auf pH 7 gestellt und bei 80° filtriert.

Beispiel 10: Verfährt man wie in Beispiel 9 angegeben, verwendet jedoch statt 8 Teilen 50%iger NaOH-Lösung und 4 Teilen Natriumdihydrogenphosphat 7,5 Teile einer 50%igen NaOH-Lösung und 4 Teile Dinatriumcarbonat, so wird der gleiche Farbstoff erhalten.

Wenn man wie in Beispiel 1 oder 9 angegeben verfährt, jedoch als Diazokomponente eine äquimolare Menge der in der folgenden Tabelle in Spalte 2 angegebenen Diazokomponenten und anstelle der Kupplungskomponente eine äquimolare Menge der in der folgenden Tabelle in Spalte 3 angegebenen Kupplungskomponenten verwendet, so erhält man bei sonst gleicher Verfahrensweise Monoazofarbstoffe in hohen Ausbeuten, die ohne Zwischenabscheidung oder ohne Reinigung direkt zum Metallkomplex weiterverarbeitet werden können.

Tabelle

| Beispiel | Diazokomponente | Kupplungskomponente |
|---|---|---|
| 11 | 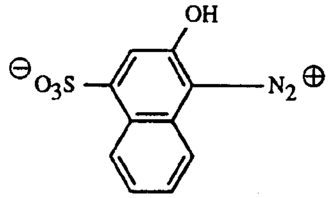 | 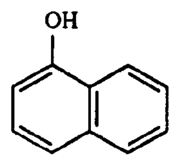 |
| 12 | 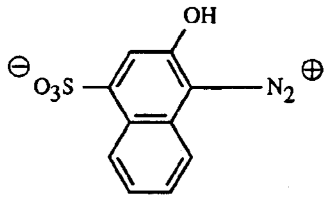 | 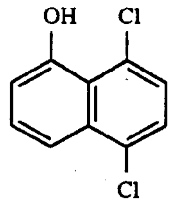 |
| 13 | 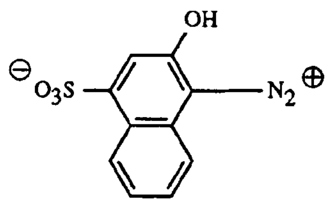 | 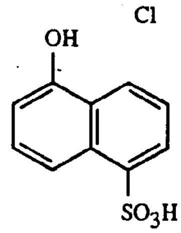 |
| 14 | 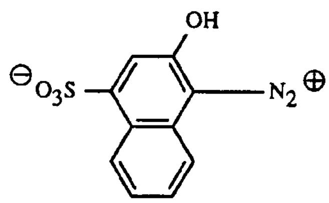 | 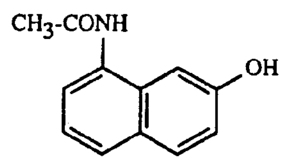 |
| 15 | 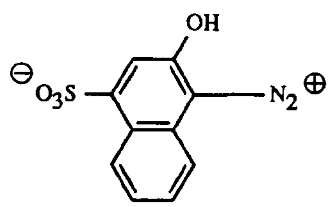 | 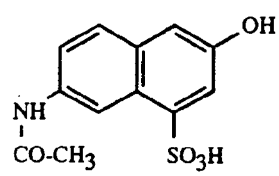 |
| 16 | 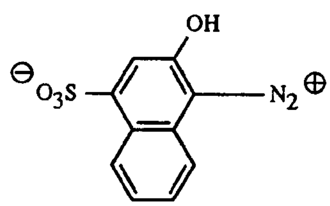 | 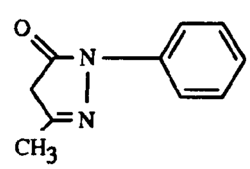 |
| 17 | 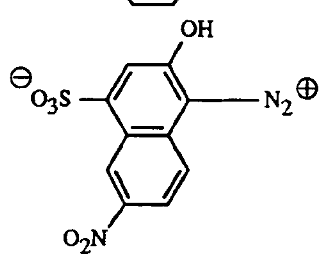 | 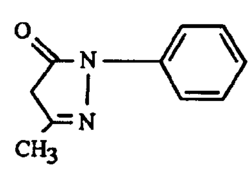 |

Tabelle

| Beispiel | Diazokomponente | Kupplungskomponente |
|---|---|---|
| 18 | 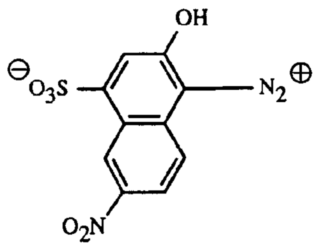 | 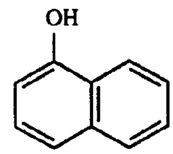 |
| 19 | 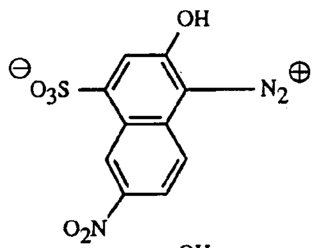 | 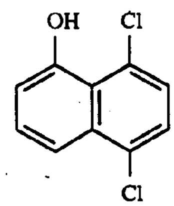 |
| 20 | 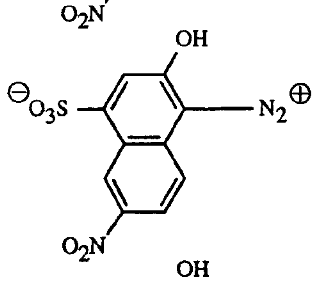 | 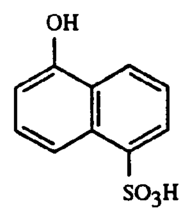 |
| 21 | 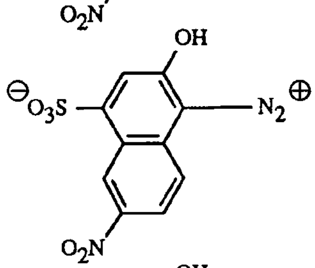 | 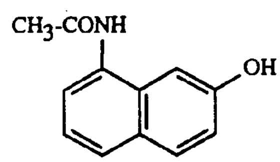 |
| 22 | 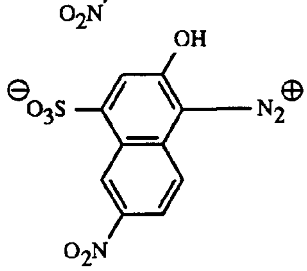 | 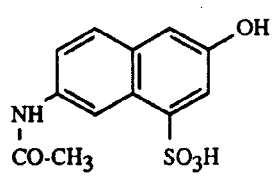 |
| 23 | 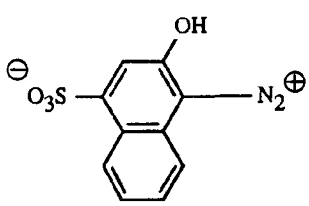 | 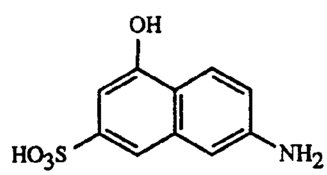 |

Tabelle

| Beispiel | Diazokomponente | Kupplungskomponente |
|---|---|---|
| 24 | 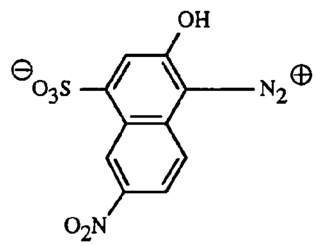 | 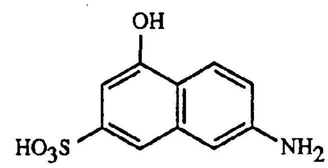 |
| 25 | 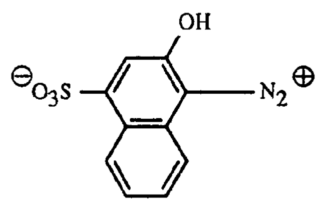 | 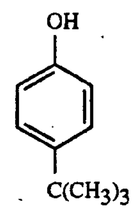 |
| 26 | 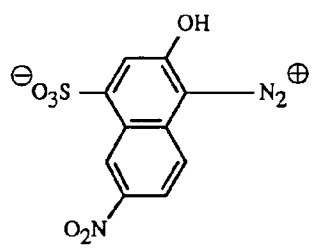 | 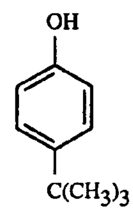 |

Die erhaltenen Farbstoffe können ohne Zwischenabscheidung oder ohne Reinigung direkt zum Metallkomplex weiterverarbeitet werden, d.h. die pH-Einstellung auf den Neutralpunkt, Erwärmen auf 80° und die Filtration entfallen.

## Patentansprüche

1. Verfahren zur Herstellung von Azofarbstoffen der Formel

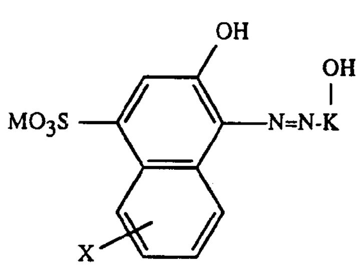

(1),

worin K der Rest einer Kupplungskomponente der Benzol- oder Naphthalinreihe oder der heterocyclischen Reihe ist, wobei die Hydroxygruppe in Nachbarstellung zu der Azogruppe an K gebunden ist, X Wasserstoff oder Nitro und M ein Alkaliion bedeutet, dadurch gekennzeichnet, dass man eine Diazokomponente der Formel

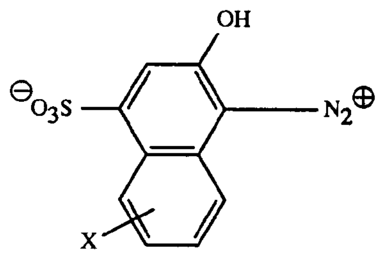

(2)

in Gegenwart eines oder mehrerer Puffergemische, ausgenommen das Puffergemisch Ammoniumchlorid/Ammoniak, und gegebenenfalls in Gegenwart von Alkalichlorid auf eine Kupplungskomponente der Formel

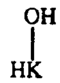

(3)

kuppelt, wobei K und X in den Formeln (2) und (3) die unter Formel (1) angegebenen Bedeutungen haben.

2. Verfahren gemäss Anspruch 1, dadurch gekennzeichnet, dass man in Gegenwart eines oder mehrerer Puffergemische aus der Reihe Dinatriumcarbonat/Natriumhydroxid, Natriumhydrogencarbonat/Natriumhydroxid, Dinatriumhydrogenphosphat/Natriumhydroxid, Natriumdihydrogenphosphat/Natriumhydroxid, Borax/Natriumhydroxid, Borax/Salzsäure, Natriumborat/Natriumhydroxid, Natriumborat/Salzsäure, Borax/Borsäure, Dinatriumcarbonat/Borsäure, Borsäure/Natriumhydroxid, Veronalnatrium/Salzsäure, Glykokoll/Natriumhydroxid, Tris(hydroxymethyl)-aminomethan/Salzsäure, Stammlösung nach Britton-Robinson/Natriumhydroxid, Teorell-Stenhagensche-Stammlösung/Salzsäure und Kaliumdihydrogenphosphat/Borax kuppelt.

3. Verfahren gemäss einem der Ansprüche 1 oder 2, dadurch gekennzeichnet, dass man in Gegenwart eines oder beider Puffergemische aus der Reihe Dinatriumcarbonat/Natriumhydroxid und Natriumhydrogencarbonat/Natriumhydroxid oder in Gegenwart eines oder beider Puffergemische aus der Reihe Dinatriumhydrogenphosphat/Natriumhydroxid und Natriumdihydrogenphosphat/Natriumhydroxid kuppelt.

4. Verfahren gemäss einem der Ansprüche 1 bis 3, dadurch gekennzeichnet, dass man in Gegenwart von Alkalichlorid, insbesondere Natriumchlorid, kuppelt.

5. Verfahren gemäss einem der Ansprüche 1 bis 4, dadurch gekennzeichnet, dass man bezogen auf die molare Menge der Diazokomponente der Formel (2) in Gegenwart der 5- bis 15-fach, insbesondere der 6- bis 9-fach molaren Menge Alkalichlorid kuppelt.

6. Verfahren gemäss einem der Ansprüche 1 bis 5, dadurch gekennzeichnet, dass man bezogen auf die molare Menge der Diazokomponente der Formel (2) in Gegenwart der 0,1- bis 1-fach, insbesondere der 0,2- bis 0,6-fach molaren Menge Dinatriumcarbonat und/oder Natriumhydrogencarbonat oder der 0,1- bis 1-fach, insbesondere der 0,2- bis 0,6-fach molaren Menge Dinatriumhydrogenphosphat und/oder Natriumdihydrogenphosphat kuppelt.

7. Verfahren gemäss einem der Ansprüche 1 bis 6, dadurch gekennzeichnet, dass man unmittelbar vor der Kupplung der Lösung/Suspension, welche die Diazokomponente der Formel (2), Alkalichlorid und die saure Komponente eines oder mehrerer Puffergemische enthält, den pH auf einen Wert zwischen 8,5 und 11,5 einstellt.

8. Verfahren gemäss Anspruch 7, dadurch gekennzeichnet, dass man den pH-Wert mit der zugehörigen basischen Komponente des oder der verwendeten Puffergemische einstellt.

9. Verfahren gemäss einem der Ansprüche 7 und 8, dadurch gekennzeichnet, dass man unmittelbar vor der Kupplung der Lösung/Suspension, welche die Diazokomponente der Formel (2), Natriumchlorid und Dinatriumcarbonat und/oder Natriumhydrogencarbonat enthält oder welche die Diazokomponente der Formel (2), Natriumchlorid und Dinatriumhydrogenphosphat und/oder Natriumdihydrogenphosphat enthält, den pH mit Natriumhydroxid auf einen Wert zwischen 8,5 und 11,5 einstellt.

**10.** Verfahren gemäss einem der Ansprüche 1 bis 6, dadurch gekennzeichnet, dass man zu der Lösung/Suspension, welche die Diazokomponente der Formel (2), Alkalichlorid und die saure Komponente eines oder mehrerer Puffergemische enthält, eine Lösung/Suspension, welche die Kupplungskomponente der Formel (3) und die zugehörige basische Komponente des oder der verwendeten Puffergemische enthält, zugibt.

**11.** Verfahren gemäss Anspruch 10, dadurch gekennzeichnet, dass man zu der Lösung/Suspension, welche die Diazokomponente der Formel (2), Natriumchlorid und Dinatriumcarbonat und/oder Natriumhydrogencarbonat enthält oder welche die Diazokomponente der Formel (2), Natriumchlorid und Dinatriumhydrogenphosphat und/oder Natriumdihydrogenphosphat enthält, eine Lösung/Suspension, welche die Kupplungskomponente der Formel (3) und Natriumhydroxid enthält, zugibt.

**12.** Verfahren gemäss Anspruch 1, dadurch gekennzeichnet, dass man zu der Lösung/Suspension, welche die Diazokomponente der Formel (2) und Natriumhydroxid enthält, eine Lösung/Suspension, welche die Kupplungskomponente der Formel (3) und Dinatriumcarbonat und/oder Natriumhydrogencarbonat enthält oder welche die Kupplungskomponente der Formel (3) und Dinatriumhydrogenphosphat und/oder Natriumdihydrogenphosphat enthält, zugibt.

**13.** Verfahren gemäss einem der Ansprüche 1 bis 12, dadurch gekennzeichnet, dass man adiabatisch kuppelt.

**14.** Verfahren gemäss einem der Ansprüche 1 bis 13, dadurch gekennzeichnet, dass man eine Kupplungskomponente der Formel (3) verwendet, worin K der Rest einer Kupplungskomponente der Benzol-oder Naphthalinreihe oder der 5-Pyrazolon-, Hydroxychinolin-, Acetoacetarylid- oder Benzoylessigsäure-Reihe ist.

**15.** Verfahren gemäss Anspruch 14, dadurch gekennzeichnet, dass K ein Benzol-, Naphthalin- oder 5-Pyrazolonrest ist, der substituiert sein kann durch $C_1$-$C_6$-Alkyl, $C_1$-$C_6$-Alkoxy, $C_2$-$C_6$-Alkanoylamino, $C_1$-$C_6$-Alkoxycarbonylamino, Phenyl, Amino, Halogen, Sulfo und Sulfonamid- und Sulfongruppen.

**16.** Verfahren gemäss Anspruch 15, dadurch gekennzeichnet, dass man als Kupplungskomponente der Formel (3) 1-Naphthol, 2-Naphthol, 5,8-Dichlor-1-naphthol, 1-Naphthol-5-sulfonsäure, 8-Acetylamino-2-naphthol, 6-Acetylamino-2-naphthol-4-sulfonsäure, 1-Phenyl-3-methylpyrazol-5-on, 6-Amino-1-naphthol-3-sulfonsäure oder 4-tert.-Butylphenol verwendet.

**17.** Verfahren gemäss einem der Ansprüche 1 bis 16, dadurch gekennzeichnet, dass man eine Kupplungskomponente der Formel (3) verwendet, worin K der Naphthylrest ist.

## Claims

**1.** A process for the preparation of an azo dye of formula

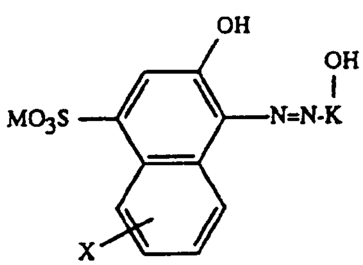

(1),

in which K is the radical of a coupling component of the benzene or naphthalene series or of the heterocyclic series, and the hydroxyl group is attached to K adjacent to the azo group, X is hydrogen or nitro and M

is an alkali metal ion, which process comprises coupling a diazo component of formula

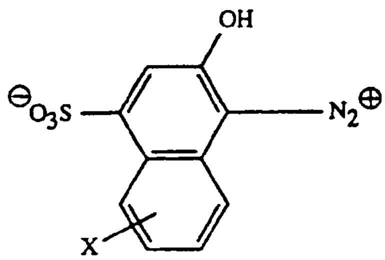

(2)

in the presence of one or more buffer mixtures, excepting the buffer mixture ammonium chloride/ammonia, and in the absence or presence of an alkali metal chloride, to a coupling component of formula

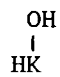

(3)

in which formulae (2) and (3) K and X are as defined for formula (1).

2. A process according to claim 1, wherein the coupling is carried out in the presence of one or more buffer mixtures from the series consisting of disodium carbonate/sodium hydroxide, sodium hydrogen carbonate/sodium hydroxide, disodium hydrogen phosphate/sodium hydroxide, sodium dihydrogen phosphate/sodium hydroxide, borax/sodium hydroxide, borax/hydrochloric acid, sodium borate/sodium hydroxide, sodium borate/hydrochloric acid, borax/boric acid, disodium carbonate/boric acid, boric acid/sodium hydroxide, veronal sodium/hydrochloric acid, glycocoll/sodium hydroxide, tris(hydroxymethyl)aminomethane/hydrochloric acid, a Britton-Robinson stock solution/sodium hydroxide, a Teorell-Stenhagen stock solution/hydrochloric acid, and potassium dihydrogen phosphate/borax.

3. A process according to either claim 1 or claim 2, wherein the coupling is carried out in the presence of one or both buffer mixtures from the series consisting of disodium carbonate/sodium hydroxide and sodium hydrogen carbonate/sodium hydroxide, or in the presence of one or both buffer mixtures from the series consisting of disodium hydrogen phosphate/sodium hydroxide and sodium dihydrogen phosphate/sodium hydroxide.

4. A process according to any one of claims 1 to 3, wherein the coupling is carried out in the presence of an alkali metal chloride, especially sodium chloride.

5. A process according to any one of claims 1 to 4, wherein the coupling is carried out in the presence of the 5- to 15-fold, especially of the 6- to 9-fold, molar amount of alkali metal chloride, based on the molar amount of the diazo component of formula (2).

6. A process according to any one of claims 1 to 5, wherein the coupling is carried out in the presence of the 0.1- to 1-fold, especially of the 0.2- to 0.6-fold, molar amount of disodium carbonate and/or sodium hydrogen carbonate, or of the 0.1- to 1-fold, especially of the 0.2- to 0.6-fold, molar amount of the disodium hydrogen phosphate and/or sodium dihydrogen phosphate, based on the molar amount of the diazo component of formula (2).

7. A process according to any one of claims 1 to 6, wherein the pH is adjusted to a value in the range from 8.5 to 11.5 immediately before the coupling of the solution/suspension which contains the diazo component of formula (2), alkali metal chloride and the acid component of one or more buffer mixtures.

8. A process according to claim 7, wherein the pH is adjusted with the appropriate basic component of the buffer mixture or mixtures employed.

9. A process according to either claim 7 or claim 8, wherein the pH is adjusted with sodium hydroxide to a value in the range from 8.5 to 11.5 immediately before the coupling of the solution/suspension which contains the diazo component of formula (2), sodium chloride and disodium carbonate and/or sodium hydrogen carbonate, or which contains the diazo component of formula (2), sodium chloride and disodium hydrogen phosphate and/or sodium dihydrogen phosphate.

**10.** A process according to any one of claims 1 to 6, which comprises adding to the solution/suspension which contains the diazo component of formula (2), alkali metal chloride and the acid component of one or more buffer mixtures a solution/suspension which contains the coupling component of formula (3) and the appropriate basic component of the buffer mixture or mixtures employed.

**11.** A process according to claim 10, which comprises adding to the solution/suspension which contains the diazo component of formula (2), sodium chloride and disodium carbonate and/or sodium hydrogen carbonate, or which contains the diazo component of formula (2), sodium chloride and disodium hydrogen phosphate and/or sodium dihydrogen phosphate, a solution/suspension which contains the coupling component of formula (3) and sodium hydroxide.

**12.** A process according to claim 1, which comprises adding to the solution/suspension which contains the diazo component of formula (2) and sodium hydroxide a solution/suspension which contains the coupling component of formula (3) and disodium carbonate and/or sodium hydrogen carbonate, or which contains the coupling component of formula (3) and disodium hydrogen phosphate and/or sodium dihydrogen phosphate.

**13.** A process according to any one of claims 1 to 12, wherein the coupling is carried out adiabatically.

**14.** A process according to any one of claims 1 to 13, which comprises the use of a coupling component of formula (3), wherein K is the radical of a coupling component of the benzene or naphthalene series or of the 5-pyrazolone, hydroxyquinoline, acetoacetarylide or benzoylacetic acid series.

**15.** A process according to claim 14, wherein K is a benzene, naphthalene or 5-pyrazolone radical which may be substituted by $C_1$-$C_6$alkyl, $C_1$-$C_6$alkoxy, $C_2$-$C_6$alkanoylamino, $C_1$-$C_6$alkoxycarbonylamino, phenyl, amino, halogen, sulfo, sulfonamido and sulfone groups.

**16.** A process according to claim 15, wherein the coupling component of formula (3) is 1-naphthol, 2-naphthol, 5,8-dichloro-1-naphthol, 1-naphthol-5-sulfonic acid, 8-acetylamino-2-naphthol, 6-acetylamino-2-naphthol-4-sulfonic acid, 1-phenyl-3-methylpyrazol-5-one, 6-amino-1-naphthol-3-sulfonic acid or 4-tert-butylphenol.

**17.** A process according to any one of claims 1 to 16, which comprises the use of a coupling component of formula (3), in which K is the naphthyl radical.

## Revendications

**1.** Procédé de préparation de colorants azoïques de formule

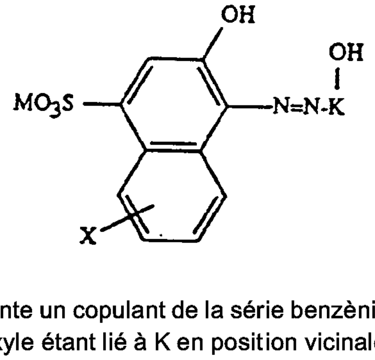

(1)

dans laquelle K représente un copulant de la série benzènique ou naphtalènique ou de la série hétérocyclique, le groupe hydroxyle étant lié à K en position vicinale du groupe azo, X représente un atome d'hydrogène ou un groupe nitro et M un ion alcalin,
caractérisé en ce que l'on copule un composant diazo de formule

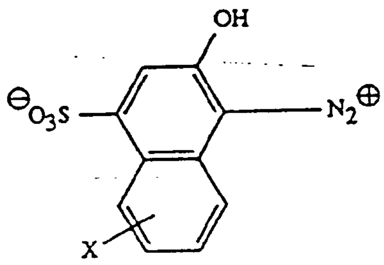

(2)

en présence d'un ou de plusieurs mélanges tampons, excepté le mélange tampon chlorure d'ammonium/ ammoniaque, et éventuellement en présence de chlorure alcalin, avec un copulant de formule

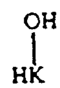

(3),

K et X ayant la même signification dans les formules (2) et (3) que celle indiquée pour la formule (1).

2. Procédé conforme à la revendication 1, caractérisé en ce que l'on réalise la copulation en présence d'un ou de plusieurs mélanges tampons de la série de constituée par les mélanges tampons suivants : carbonate de sodium/hydroxyde de sodium, hydrogénocarbonate de sodium/hydroxyde de sodium, hydrogénophosphate de sodium/hydroxyde de sodium, dihydrogénophosphate de sodium/hydroxyde de sodium, borax/hydroxyde de sodium, borax/acide chlorhydrique, borate de sodium/hydroxyde de sodium, borate de sodium/acide chlorhydrique, borax/acide borique, carbonate de sodium/acide borique, acide borique/hydroxyde de sodium, véronal de sodium/acide chlorhydrique, glycocole/hydroxyde de sodium, tris(hydroxyméthyl)-aminométhane/acide chlorhydrique, solution mère de Britton-Robinson/hydroxyde de sodium, solution mère de Teorell-Stenhagen/acide chlorhydrique et dihydrogénophosphate de potassium/borax.

3. Procédé conforme à une des revendications 1 ou 2, caractérisé en ce que l'on réalise la copulation en présence d'un ou de deux mélanges tampons de la série consituée par le carbonate de sodium/hydroxyde de sodium et l'hydrogénocarbonate de sodium/hydroxyde de sodium, ou en présence d'un ou de deux mélanges tampons de la série constituée par l'hydrogéno-phosphate de sodium/hydroxyde de sodium et le dihydrogénophosphate de sodium/hydroxyde de sodium.

4. Procédé conforme à une des revendications 1 à 3, caractérisé en ce que l'on réalise la copulation en présence de chlorure alcalin, en particulier en présence de chlorure de sodium.

5. Procédé conforme à une des revendications 1 à 4, caractérisé en ce que l'on réalise la copulation en présence de chlorure alcalin en une quantité telle que le rapport molaire au composant diazo de formule (2) soit compris entre 5 et 15, en particulier entre 6 et 9.

6. Procédé conforme à une des revendications 1 à 5, caractérisé en ce que l'on réalise la copulation en présence de carbonate de sodium et/ou d'hydrogénocarbonate de sodium en une quantité telle que le rapport molaire au composant diazo de formule (2) soit compris entre 0,1 et 1, en particulier entre 0,2 et 0,6, ou en présence d'hydrogénophosphate de sodium et/ou de dihydrogénophosphate de sodium en une quantité telle que le rapport molaire par rapport au composant diazo de formule (2) soit compris entre 0,1 et 1, en particulier entre 0,2 et 0,6.

7. Procédé conforme à une des revendications 1 à 6, caractérisé en ce que l'on ajuste, immédiatement avant la copulation, le pH de la solution/suspension contenant le composant diazo de formule (2), le chlorure alcalin et le composant acide d'un ou de plusieurs mélanges tampons, à une valeur comprise entre 8,5 et 11,5.

8. Procédé conforme à la revendication 7, caractérisé en ce que l'on ajuste le pH à l'aide du composant basique du ou des mélanges tampons utilisés.

9. Procédé conforme à une des revendications 7 ou 8, caractérisé en ce que l'on ajuste, immédiatement avant la copulation, le pH de la solution/suspension contenant le composant diazo de formule (2), du chlorure de sodium et du carbonate de sodium et/ou de l'hydrogénocarbonate de sodium, ou contenant le composant diazo de formule (2), du chlorure de sodium et de l'hydrogénophosphate de sodium et/ou du dihydrogénophosphate de sodium à une valeur comprise entre 8,5 et 11,5.

10. Procédé conforme à une des revendications 1 à 6, caractérisé en ce que l'on ajoute à la solution/suspension contenant le composant diazo de formule (2), du chlorure alcalin et le composant acide d'un ou de plusieurs mélanges tampons, une solution/suspension contenant le copulant de formule (3) et le composant basique correspondant du ou des mélanges tampons utilisés.

11. Procédé conforme à la renvendication 1, caractérisé en ce que l'on ajoute à la solution/suspension contenant le composant diazo de formule (2), du chlorure de sodium et du carbonate de sodium et/ou de l'hydrogénocarbonate de sodium, ou contenant le composant de formule (2), du chlorure de sodium et de l'hydrogénophosphate de sodium et/ou du dihydrogénophosphate de sodium, une solution/suspension contenant le copulant de formule (3) et de l'hydroxyde de sodium.

12. Procédé conforme à la revendication 1, caractérisé en ce que l'on ajoute à la solution/suspension contenant le composant diazo de formule (2) et de l'hydroxyde de sodium, une solution/suspension contenant le copulant de formule (3) et du carbonate de sodium et/ou de l'hydrogénocarbonate de sodium, ou contenant le copulant de formule (3) et de l'hydrogénophosphate de sodium et/ou du dihydrogénophosphate de sodium.

13. Procédé conforme à une des révendications 1 à 12, caractérisé en ce que la copulation est réalisée dans des conditions adiabatiques.

14. Procédé conforme à une des revendication 1 à 13, caractérisé en ce que l'on utilise un copulant de formule (3) dans laquelle K est le résidu d'un copulant de la série benzènique, naphtalènique ou de la série constituée par les composés de type 5-pyrazolone, l'hydroxyquinoléine, l'acétoacétarylide ou l'acide benzoylacétique.

15. Procédé conforme à la revendication 14, caractérisé en ce que K représente un résidu benzyle, naphtyle ou 5-pyrazolonyle, pouvant être substitués par un groupe alkyle en $C_1$-$C_6$, alkoxy en $C_1$-$C_6$, alcanoylamino en $C_2$-$C_6$, alkoxycarbonylamino en $C_1$-$C_6$, phényle, amino, sulfo, sulfonamide et sulfonyle et un atome d'halogène.

16. Procédé conforme à la revendication 15, caractérisé en ce que l'on utilise comme copulant de formule (3), le 1-naphtol, le 2-naphtol, de 5,8-dichloro-1-naphtol, l'acide 1-naphtol-5-sulfonique, le 8-acétylamino-2-naphtol, l'acide 6-acétylamino-2-naphtol-4-sulfonique, la 1-phényl-3-méthylpyrazol-5-one, l'acide 6-amino-1-naphtol-3-sulfonique ou le 4-ter-butylphénol.

17. Procédé conforme à une des revendications 1 à 16, caractérisé en ce l'on utilise un copulant de formule (3) dans laquelle K représente le résidu naphtyle.